# EUROPÄISCHE PATENTSCHRIFT

(11) **EP 3 123 278 B1**
(45) Veröffentlichungstag und Bekanntmachung des Hinweises auf die Patenterteilung: **05.06.2019**
(21) Anmeldenummer: 15712636.8
(22) Anmeldetag: 27.03.2015
(51) Int. Cl.: G06F 3/01, G06F 3/041

(54) **VERFAHREN UND SYSTEM ZUM BETREIBEN EINER ANZEIGEVORRICHTUNG**
METHOD AND SYSTEM FOR OPERATING A DISPLAY DEVICE
PROCÉDÉ ET SYSTÈME DE FONCTIONNEMENT D'UN DISPOSITIF D'AFFICHAGE

(30) Priorität: 27.03.2014 EP 14162073
(43) Veröffentlichungstag der Anmeldung: 01.02.2017
(73) Patentinhaber: SensoMotoric Instruments Gesellschaft für innovative Sensorik mbH, 14513 Teltow (DE)
(72) Erfinder: SCHMIDT, Eberhard, 14532 Kleinmachnow (DE)
(74) Vertreter: Lang, Johannes
(86) Internationale Anmeldenummer: PCT/EP2015/056786
(87) Internationale Veröffentlichungsnummer: WO 2015/144908

(56) Entgegenhaltungen:
- EP-A1- 1 997 667
- EP-A1- 2 065 795
- WO-A1-00/33731
- WO-A1-2010/118292
- WO-A1-2013/093040
- GB-A- 2 467 898
- GB-A- 2 490 868
- US-A1- 2011 134 124
- US-A1- 2011 254 865
- US-A1- 2012 256 967
- US-A1- 2012 272 179
- US-A1- 2013 257 723

## Beschreibung

Die vorliegende Erfindung betrifft ein Verfahren zum Betreiben einer Anzeigevorrichtung, welches die folgenden Schritte umfasst: Zunächst werden Bilddaten zumindest eines Teils des Kopfes eines Benutzers erfasst. Anschließend wird aus den erfassten Bilddaten mindestens ein von dem Benutzer durch Bewegung zumindest eines Teils des Kopfes veränderbarer Parameter ermittelt und anschließend eine visuelle Darstellung auf einer Anzeigevorrichtung in Abhängigkeit des ermittelten mindestens einen Parameters gesteuert. Die Erfindung betrifft weiterhin ein Rechnerprogrammprodukt mit einem Programm für eine Recheneinrichtung mit Programmcodeabschnitten zum Ausführen und/oder Veranlassen der Schritte des Verfahrens, wenn das Programm auf der Rechnereinrichtung ausgeführt wird. Schließlich umfasst die vorliegende Erfindung ein entsprechendes System zum Betreiben einer Anzeigevorrichtung mit einer Erfassungsvorrichtung zum Erfassen von Bilddaten zumindest eines Teils des Kopfes eines Benutzers, mindestens einer Recheneinrichtung, die ausgelegt ist, mindestens einen von dem Benutzer durch Bewegung zumindest eines Teils des Kopfes veränderbaren Parameter aus den von der Erfassungsvorrichtung erfassten Bilddaten zu ermitteln, sowie eine Steuervorrichtung zum Steuern einer visuellen Darstellung auf einer Anzeigevorrichtung in Abhängigkeit des von der Recheneinrichtung ermittelten mindestens einen Parameters.

In diesem Zusammenhang sind so genannte Tracking-Vorrichtungen, beispielsweise Eye-, Face- oder Headtracker, bekannt, die ausgelegt sind, Bilder zumindest eines Teils des Kopfes eines Benutzers bereitzustellen und daraus die Blickrichtung, Augenbewegungen und andere Augen- und Kopfdaten des Benutzers zu ermitteln. Derartige Tracking-Vorrichtungen können als physische Einheit vorkommen oder verteilt sein. Verteilt sind sie, wenn beispielsweise Kameras und Beleuchtungen separat vorgesehen oder in einen Monitor integriert sind, während das Programm zur Datenverarbeitung auf einem daran angeschlossenen Rechner, beispielsweise PC, Tablet PC oder Smartphone etc., abläuft. Derartige Tracking-Vorrichtungen können jedoch auch als physische Einheit ausgebildet sein, wenn eine Rechnereinheit in einer Vorrichtung, beispielsweise nach Art einer von dem Benutzer zu tragenden Brille, einen Tablet PC oder ein Laptop, integriert ist, wobei diese Vorrichtung weiterhin mindestens eine Kamera, mindestens ein Display und optional mindestens eine Beleuchtungsvorrichtung aufweist. Optional kann In diesem Fall jedoch auch vorgesehen sein, dass die von der Rechnereinheit über die mindestens eine Kamera erfassten und gegebenenfalls weiter verarbeiteten Daten an einen weiteren Rechner, beispielsweise einen PC, Tablet PC oder an ein Smartphone etc., zur Nutzung weitergegeben werden.

Aus den von der Tracking-Vorrichtung ermittelten Bilddaten wird mindestens ein von dem Benutzer durch Bewegung eines Teils des Kopfes veränderbarer Parameter ermittelt. Dieser Parameter kann beispielsweise die Blickrichtung sein, jedoch auch Augenbewegungen, Kopfbewegungen und andere Augen- und Kopfdaten. Dieser mindestens eine Parameter wird dann dazu verwendet, eine visuelle Darstellung einer Softwareanwendung auf einer Anzeigevorrichtung zu steuern, beispielsweise eine Darstellung zu scrollen, eine Zelle in einer Excel-Tabelle zur Bearbeitung auszuwählen, ein Icon anzuwählen, etc. Auf diese Weise können beispielsweise auch Behinderte, denen eine herkömmliche Bedienung von Computerprogrammen nicht möglich ist, Softwareanwendungen nutzen.

Im Rahmen der nachfolgenden Ausführungen bezeichnet der Ausdruck "Anwendung" ein Anwendungsprogramm, beispielsweise Word. Mit dem Ausdruck "Datei" wird ein Dokument bezeichnet, wie das vorliegende. Kontextparameter können an eine Datei, oder eine Anwendung oder feinere Einheiten wie Objekte, Einstellungen und dergleichen gebunden sein.

Es hat sich gezeigt, dass Benutzern die Bedienung von Softwareanwendungen durch Steuern mittels einer Tracking-Vorrichtung in unterschiedlichen Situationen schwerer oder leichter fällt, wobei die Bedienbarkeit auch von den Anforderungen der Softwareanwendung, insbesondere der jeweils angestrebten Interaktion, abhängig sein kann.

Die WO 2013/093040 A1 beschreibt ein Verfahren und System zur Darstellung mindestens eines Bildes zumindest einer Anwendung auf einer Anzeigevorrichtung. Die Art der Darstellung des Bildes wird dabei in Abhängigkeit von einem aus einer Bildaufnahme ermittelten Positionswert des Benutzers geändert. Diese Darstellungsänderung dient dabei dazu, dem Benutzer ein Feedback über seine Position relativ zu einem Sollbereich zu geben. Weicht der Benutzer also von einem vorbestimmten Sollbereich ab, wird die Darstellung derart variiert, dass der Benutzer den Eindruck erhält, dass er das auf der Anzeigevorrichtung dargestellte Bild der Anwendung nicht richtig sehen kann, wenn er sich nicht in einer vorgebbaren Position vor der Erfassungsvorrichtung befindet.

Die WO 2010/118292 A1 beschreibt eine Eye-Tracking-Vorrichtung mit einer Bilderfassungseinrichtung, einem Prozessor und einer Anzeigeeinrichtung zum Anzeigen einer Benutzerschnittstelle mit einem oder mehreren Interfaceelementen. Dabei detektiert die Bilderfassungseinrichtung den Blickpunkt des Benutzers relativ zur Anzeigevorrichtung. Weiterhin wird die Anzahl, Größe und Dichte der Interfaceelemente relativ zum Blickpunkt des Benutzers erfasst und in Abhängigkeit davon ein Zoomfenster angezeigt.

Die GB 2 467 898 A beschreibt eine Anzeigeeinrichtung, bei welcher die angezeigte visuelle Darstellung in Abhängigkeit von der erfassten Position eines Benutzers vor der Anzeigeeinrichtung geändert werden kann. Unter anderem kann dabei auch die Auflösung der Darstellung variiert werden.

Die WO 00/33731 A1 beschreibt die Steuerung von Funktionen durch elektrische Signale, die mittels an der Stirn eines Benutzers angebrachten Sensoren bzw. Elektroden erfasst werden. Dadurch kann auch ein Cursor gesteuert werden, insbesondere in unterschiedlichen Geschwindigkeiten.

Die US 2011/134124 A1 beschreibt ein Verfahren zum Steuern einer Rechnereinrichtung mit einer Anzeigeeinrichtung, wobei ein Blickpunkt eines Benutzers auf der Anzeigeeinrichtung bestimmt wird, ermittelt wird, ob das Auge des Benutzers auf einen Nahbereich akkommodiert ist, und in Abhängigkeit davon die Auflösung der Anzeigeeinrichtung im Bereich des Blickpunkts erhöht wird.

Die GB 2 490 868 A beschreibt eine Vorrichtung mit einer Blickrichtungserfassungseinrichtung. Dabei kann die Auflösung einer Darstellung auf einem Display durch Zoomen in Abhängigkeit von einem erfassten Abstand des Benutzers bzw. dessen Gesicht vom Display geändert werden kann.

Die US 2013/257723 A1 offenbart die Steuerung eines Cursors auf einem Bildschirm mittels Gesten oder Kopfbewegungen, die durch eine Kamera erfasst werden können. Die Bewegungsgeschwindigkeit des Cursors kann dabei in Abhängigkeit vom Darstellungsinhalt abhängig sein oder abhängig von einem Abstand zwischen dem Gesicht des Benutzers und einem Ort, an welchem der Benutzer eine bestimmte Handlung durchgeführt hat.

Die US 2011/254865 A1 beschreibt ein mobiles Kommunikationsgerät mit Blickerfassung, wobei in Abhängigkeit des erfassten Blicks Bereiche einer Darstellung auf dem Display, auf die der Benutzer blickt, vergrößert dargestellt werden können.

Die US 2012/272179 A1 beschreibt eine Cursorsteuerung mittels Head- und Eye-Tracking, wobei ein Zielbereich, der durch den Cursor angefahren werden soll, durch eine Blickrichtung des Benutzers bestimmt wird. Weiterhin kann die Bewegungsgeschwindigkeit des Cursors in Abhängigkeit vom Abstand zu diesem Zielbereich geändert werden.

Die EP 2 065 795 A1 beschreibt die Änderung einer Zoomeigenschaft eines Displays in Abhängigkeit einer erfassten Entfernung des Benutzers vom Display.

Die Aufgabe der vorliegenden Erfindung besteht deshalb darin, ein eingangs genanntes Verfahren, ein entsprechendes Rechnerprogrammprodukt sowie ein entsprechendes System bereitzustellen, mittels dessen eine Bedienung einer visuell auf einer Anzeigevorrichtung darstellten Softwareanwendung auch in unterschiedlichen Situationen möglichst einfach und zuverlässig ermöglicht wird.

Diese Aufgabe wird gelöst durch ein Verfahren mit den Merkmalen von Patentanspruch 1, ein Rechnerprogrammprodukt mit den Merkmalen von Patentanspruch 15 sowie durch ein System mit den Merkmalen von Patentanspruch 16.

Die vorliegende Erfindung basiert auf der Kombination mehrerer Erkenntnisse: Zum einen wird die Robustheit der Steuerung visueller Darstellungen von Softwareanwendungen auf einer Anzeigevorrichtung mittels Tracking-Vorrichtungen stark beeinflusst von den Umgebungsbedingungen, physiognomischen und kosmetischen Augen- und/oder Kopfparametern des Benutzers. Zum anderen wir die Robustheit der Steuerung durch das Verhalten des Benutzers beeinflusst. Weiterhin ist die Robustheit und auch ihre Beeinflussung durch die genannten Parameter unterschiedlich je nach den spezifischen Eigenschaften der verwendeten technischen Bauelemente, wie Kamerasensoren, Optiken, gegebenenfalls vorhandener Beleuchtung, und dergleichen. Unterschiedliche Tracking-Vorrichtungen und sogar unterschiedliche Geräte desselben Designs stellen nämlich nicht dieselbe Messgenauigkeit und Robustheit für alle Benutzer, Anwendungen und Situationen bereit. Überdies sind die Auswirkungen der genannten Unterschiede in der Robustheit je nach Anforderung der zu steuernden Softwareanwendung unterschiedlich. Je kleiner die steuerungsrelevanten Elemente auf dem Bildschirm dargestellt sind, desto größer sind die Auswirkungen der Robustheitsschwankungen auf die Bedienbarkeit und die Nutzerwahrnehmung. Schließlich ist zu berücksichtigen, dass, je mehr Benutzer solche Steuerungstechniken verwenden und je alltäglicher, d.h. unkontrollierter, die Einsatzgebiete und die Softwareanwendungen werden, eine gleichmäßige Qualität der Bedienbarkeit sowie der Benutzerwahrnehmung umso wichtiger wird.

Um unterschiedlichsten Benutzern eine effektive Benutzung derartiger Interaktionsvorrichtungen, d.h. Tracking-Vorrichtungen, mit denen Softwareanwendungen bedient werden können, zu ermöglichen, wird bei der vorliegenden Erfindung mindestens ein die Genauigkeit widerspiegelnder Qualitätsparameter ermittelt und ein "adaptiver Zoom" für die Interaktion bereitgestellt.

Wählt ein Benutzer im Rahmen der vorliegenden Erfindung beispielsweise durch Blickrichtung eine Zelle in einem Tabellenkalkulationsprogramm aus, kann erfindungsgemäß das Zellengitter dem Benutzer zu diesem Zweck mit einem Zoomlevel bereitgestellt werden, der auf die Qualität der Erfassung der Bilddaten bzw. der Genauigkeit des oben genannten ermittelten eines Parameters mit der speziell verwendeten Tracking-Vorrichtung bzw. in der bestimmten Situation, die durch Umgebungsbedingungen beeinflusst wird, bzw. für den bestimmten Benutzer abgestimmt ist. Umgekehrt besteht die Möglichkeit, eine von der Anwendung bereitgestellte Auswahlvorrichtung, beispielsweise eine Zellmarkierung in einem Tabellenkalkulationsprogramm, der normalerweise eine Zelle groß ist, so viele Zellen groß zu machen, wie sich aus der momentan erzielbaren Genauigkeit ergibt. Diese hängt ab von physischen Eigenschaften des Benutzers, den Umgebungsbedingungen, der verwendeten Hardware, von der Entfernung zwischen Benutzer und Tracking-Vorrichtung und anderen Bedingungen. Wenn demnach die Genauigkeit nur vier Zellen groß ist, dann wird immer ein Block von vier Zellen als Auswahlelement hervorgehoben angezeigt. Weiterhin kann auch in nicht diskreten Interaktionsszenarien der Cursor oder Mauszeiger der aktuellen Qualität der Erfassung der Bilddaten und/oder der Genauigkeit des oben genannten ermittelten Parameters angepasst werden und bei schlechterer Qualität oder geringerer Genauigkeit so viel größer werden, dass die Steuerung der Softwareanwendung immer entsprechend den visuellen Erwartungen erfolgt.

Die Unterschiede in der Darstellung müssen nicht groß sein, sondern können auch sehr klein sein. Entscheidend ist, dass die Anpassung dergestalt erfolgt, dass der Benutzer auch die Interaktion durchführen kann, die er aufgrund der visuellen Darstellung von Bedienelementen der Softwareanwendung erwartet.

Erfindungsgemäß wird deshalb mindestens ein Qualitätsparameter basierend auf der Erfassung der Bilddaten ermittelt und anschließend zumindest die Auflösung zumindest eines Teils der visuellen Darstellung in Abhängigkeit des mindestens einen Qualitätsparameters variiert. Dabei stellt der ermittelte Parameter eine Messgröße dar und der Qualitätsparameter stellt die zur Messgröße gehörende Messgenauigkeit oder ein Maß für die zur Messgröße gehörende Messgenauigkeit dar.

Unter dem Begriff Auflösung ist im Rahmen der vorliegenden Erfindung die Größe der visuellen Darstellung gemeint. Eine Änderung der Auflösung im Sinne einer Änderung der Zahl der Pixel pro Objekt bei unveränderter Größe kann, aber muss nicht dabei vorgenommen werden.

Wird demnach eine schlechte Qualität auf der Grundlage der erfassten Bilddaten festgestellt, beispielsweise aus den erfassten Bilddaten selbst oder aus Zwischen- oder Ergebnisdaten, die aus diesen Bilddaten berechnet werden, so kann die Auflösung zumindest eines Teils der visuellen Darstellung verändert werden, um die Bedienung der Softwareanwendung mittels der Tracking-Vorrichtung durch den Benutzer weiterhin auch unter diesen schlechten Bedingungen zu ermöglichen. Auf diese Weise kann eine optimale Auflösung, beispielsweise der Zoom-Level der auf der Anzeigevorrichtung dargestellten visuellen Darstellung, bereitgestellt werden, um eine optimale "virtuelle Genauigkeit" für die Interaktion des Benutzers mit der Softwareanwendung zu ermöglichen.

Durch das erfindungsgemäße Verfahren kann demnach eine hohe Robustheit derartiger Anwendungen für unterschiedlichste Benutzer, Hardwareausstattungen und Umgebungsbedingungen sichergestellt werden. Insbesondere wird eine zuverlässige Bedienung einer derartigen Anwendung auch bei kostengünstiger Hardwareausstattung, bei hohen Genauigkeitsanforderungen der zu steuernden Softwareanwendung oder einem Benutzer mit eingeschränkten Bedienfähigkeiten ermöglicht.

Der Qualitätsparameter betrifft dabei die Qualität, insbesondere Messgenauigkeit, des aus den Bilddaten ermittelten Parameters oder der Bilddaten selbst. Er stellt ein Maß für die Genauigkeit, insbesondere Messgenauigkeit, des ermittelten Parameters, und insbesondere auch der Ermittlung des Parameters, dar und ist damit ein vom ermittelten Parameter verschiedener Parameter. Der Qualitätsparameter und der ermittelte Parameter werden dabei auf Basis derselben Bilddaten ermittelt. Insbesondere der Qualitätsparameter kann dabei auf Basis dieser Bilddaten und/oder auf der Basis des ermittelten Parameters bestimmt werden. Zur Ermittlung des Qualitätsparameters werden bevorzugt Daten, die in die Ermittlung des Parameters eingehen und/oder der ermittelte Parameter selbst analysiert, wobei insbesondere die Daten die erfassten Bilddaten und/oder Zwischen- und/oder Ergebnisdaten, die aus den Bilddaten berechnet werden, darstellen können. Somit kann der ermittelte Parameter als eine Messgröße darstellend aufgefasst werden, wobei der Qualitätsparameter die zur Messgröße gehörige Messgenauigkeit bzw. Verlässlichkeit angibt bzw. ein Maß für die zur Messgröße gehörige Genauigkeit, insbesondere Messgenauigkeit, darstellt. Der Qualitätsparameter quantifiziert, insbesondere auch in prognostizierender Weise, also z.B., wie groß eine Abweichung des ermittelten Parameters von einem tatsächlichen Parameter, z.B. maximal, mindestens oder im Mittel, ist, beispielsweise eine maximal mögliche Abweichung zwischen der ermittelten Blickrichtung von einer tatsächlichen Blickrichtung. Der Qualitätsparameter kann auch einen Schätzwert angeben, um den der ermittelte Parameter vom korrespondierenden tatsächlichen Parameter, z.B. maximal, abweicht. Der Qualitätsparameter kann bspw. auch die tatsächliche oder geschätzte Abweichung zeitlich unmittelbar oder mit in einem bestimmten zeitlichen Abstand aufeinanderfolgender ermittelter Parameter angeben, z.B. in Form einer Streuung der aufeinanderfolgend ermittelten Parameter um einen Mittelwert. Hierzu kann zur Bestimmung der Abweichung u.a. die Summe absoluter Differenzwerte zwischen ermittelten Parametern oder die Summe absoluter Differenzwerte zwischen ermittelten Parametern und das Mittel der ermittelten Parametern oder andere Verfahren wie Standardabweichung, Varianz, Korrelation, Maß spektraler Konstanz (spektrale Flachheit) herangezogen werden. Der Qualitätsparameter als zeitliche Abweichung von ermittelten Parametern kann bspw. für einen festen oder festen und überlappenden oder von einem Blickereignis (Fixation, Sakkade etc.) bestimmten Zeitraum bestimmt werden.

Der ermittelte Parameter weist also eine Messungenauigkeit auf, die der zugeordnete Qualitätsparameter angibt bzw. widerspiegelt. Es kann z.B. vorgesehen sein, dass der Qualitätsparameter selbst dabei nicht die Umgebungsbedingungen bzw. Umgebungseinflüsse angibt, die Einfluss auf die Messgenauigkeit haben, sondern die Messgenauigkeit bzw. ein Maß für die Messgenauigkeit selbst darstellt. Der Qualitätsparameter selbst gibt z.B. damit keine Positionsinformation über den Benutzer an, und z.B. lässt sich eine solche auch nicht aus dem Qualitätsparameter ableiten. Vorteilhafterweise müssen daher die Umgebungsbedingungen, z.B. Umgebungshelligkeit, Abstand des Benutzers zur Erfassungseinrichtung, usw., bei der Erfassung der Bilddaten selbst nicht notwendigerweise bekannt sein, während jedoch ihre Auswirkungen auf die Ermittlung des Parameters ermittelt und angegeben werden können, wenn z.B. der Qualitätsparameter Bildparameter wie Kontrast oder Rauschanteile beobachtet und daraus ein Einfluss auf die Genauigkeit oder Stabilität des ermittelten Parameters bestimmt wird. Bei Bedarf können aber aus den Bildparametern auch Rückschlüsse auf Umgebungsbedingungen, wie z.B. Umgebungshelligkeit, gezogen werden.

Bevorzugt können zur Ermittlung des mindestens einen Qualitätsparameters mindestens eine Qualität und/oder Größe des aus den Bilddaten ermittelten Parameters und/oder eine Qualität der Erfassung der Bilddaten und/oder die erfassten Bilddaten analysiert werden. Hierdurch lässt sich die Messgenauigkeit des ermittelten Parameters vorteilhafterweise ermitteln, ohne die aktuellen Umgebungsbedingungen kennen oder direkt messen zu müssen. Insbesondere können bei oben genannter Analyse auch die Größe eines zur Ermittlung des Parameters erforderlichen und aus den Bilddaten ermittelten Zwischenparameters ausgewertet werden und/oder die Qualität der Bilddaten.

Betrifft die Auflösung eine Eigenschaft, insbesondere die Größe, der visuellen Darstellung, so wird die Auflösung bevorzugt derart variiert, dass bei durch den Qualitätsparameter angegebener geringerer Genauigkeit des ermittelten Parameters die Auflösung erhöht, z.B. die Darstellung vergrößert wird, gegenüber einer Auflösung bei durch den Qualitätsparameter angegebener höherer Genauigkeit. Betrifft die Auflösung die Auflösung einer Bewegungsgeschwindigkeit eines bewegbaren Elements, das von der visuellen Darstellung umfasst ist, wird die Auflösung z.B. derart variiert, dass die Auflösung bei geringerer Genauigkeit reduziert, z.B. die Bewegungsgeschwindigkeit verringert, ist gegenüber der Auflösung bei höherer Genauigkeit des ermittelten Parameters. Dies erleichtert in beiden Fällen die Steuerung der Darstellung für den Benutzer.

Bevorzugt umfasst die visuelle Darstellung zumindest ein durch Bewegung zumindest eines Teils des Kopfes bewegbares Element, wobei in Schritt e) die Auflösung einer Bewegungsgeschwindigkeit des zumindest einen bewegbaren Elements in Abhängigkeit des mindestens einen Qualitätsparameters variiert wird.

Bei schlechten Bedingungen kann es für den Benutzer bei einer gegebenen Auflösung unmöglich sein, durch Bewegung zumindest eines Teils des Kopfes ein Element auf der visuellen Darstellung zielgenau anzufahren. Wird dann die Auflösung der Bewegungsgeschwindigkeit des bewegbaren Elements reduziert, wird auf diese Weise die Bedienung der Anwendung erleichtert.

Bei einer bevorzugten Ausführungsform wird in Schritt e) die Auflösung der gesamten visuellen Darstellung in Abhängigkeit des mindestens einen Qualitätsparameters variiert. Auf diese Weise wird die Bedienung der Softwareanwendung beispielsweise von Benutzern mit eingeschränkten visuellen Fähigkeiten, beispielsweise infolge von Augenkrankheiten, Alter und dergleichen, erleichtert.

Alternativ kann in Schritt e) die Auflösung nur eines Teils der visuellen Darstellung in Abhängigkeit des mindestens einen Qualitätsparameters variiert werden. Dadurch wird der auf der Anzeigevorrichtung darstellbare Inhalt nur unwesentlich reduziert, sodass beispielsweise trotz einer Vergrößerung der Auflösung mit mehreren Fenstern gearbeitet werden kann, wenn beispielsweise nur der Inhalt des jeweils aktiven Fensters mit verbesserter Auflösung dargestellt wird.

Die visuelle Darstellung kann zumindest ein statisches und/oder ein dynamisches Element umfassen, wobei in Schritt e) die Auflösung des statischen und/oder des dynamischen Elements in Abhängigkeit des mindestens einen Qualitätsparameters variiert wird. Als Teil der visuellen Darstellung, deren Auflösung variiert wird, kann mindestens eines der Elemente aus der folgenden Gruppe in Betracht kommen: ein Bereich gemäß einer Lupenfunktion, der Inhalt eines vorgebbaren Arbeitsfensters, ein Mauszeiger, ein Cursor und/oder logische Segmente einer Anwendung, die die visuelle Darstellung erzeugt. Dies könnte beispielsweise bei Excel oder anderen Software-Anwendungen den Zellenbereich eines Arbeitsblattes, die Inhalte einer Zelle, die Symbolleisten, deren Pulldown-Menüs, Scroll-Leisten etc. betreffen.

Auf diese Weise kann beispielsweise eine Auswahlvorrichtung, also ein Mauszeiger oder ein Cursor, derart variiert, d.h. bei schlechten Bedingungen derart vergrößert werden, dass er den Genauigkeitslevel wiedergibt, mit dem der Benutzer in der aktuellen Situation visuell dargestellte Zielobjekte der auf der Anzeigevorrichtung dargestellten Anwendung auswählen kann.

Bevorzugt wird zur Ermittlung des mindestens einen Qualitätsparameters mindestens eine Größe aus der folgenden Gruppe ermittelt: Parameter der in Schritt a) erfassten Bilddaten, insbesondere Rauschanteile, Frequenz- und/oder Intensitätsverteilungen im Bild und/oder des mindestens einen ermittelten Objekts, einerseits und/oder Parameter bei der Auswertung der in Schritt a) erfassten Bilddaten, insbesondere bei aus den erfassten Bilddaten berechneten Zwischen- oder Ergebnisdaten andererseits.

Mit anderen Worten können die Qualitätsparameter an jeder Stelle der Signalverarbeitungskette, vom Kamerabild bis zu den endgültig berechneten Daten, ermittelt werden. Bei den Rauschanteilen, dem Signal-Rauschabstand oder anderen Parametern der ermittelten Objekte kommen insbesondere solche von Pupille, Limbus oder cornealem Reflex in Betracht. Bei Rauschanteilen der Ergebnisdaten kommt insbesondere beispielsweise die Blickrichtung oder die Kopforientierung in Betracht.

Zur Ermittlung des mindestens einen Qualitätsparameters werden die in Schritt a) erfassten Bilddaten bevorzugt analysiert im Hinblick auf mindestens eine der folgenden Größen: Frequenzanteile in vorgebbaren Frequenzbereichen, insbesondere durch örtlich-zeitliche Frequenzanalyse (spatio-temporal frequency analysis) und Wavelets, Kontrastwerte in vorgebbaren Bildbereichen, insbesondere Gradienten, Kanten, Intensitäten, Häufigkeiten/Verteilungen in Bildbereichen, Größenwerte von vorgebbaren Parametern, Größenwerte von Ergebnisdaten, das Vorhandensein mindestens eines vorgebbaren Objekts und/oder eine Änderungs- oder Beschleunigungsrate von aus den in Schritt a) erfassten Bilddaten ermittelten Zwischen- oder Ergebnisdaten. Weiterhin kommen für die Analyse, insbesondere entsprechende, maschinelle/adaptive Lernverfahren in Betracht. Durch Auswertung der Frequenzanteile in vorgebbaren Frequenzbereichen können Rauschanteile bzw. Jitter als Auffälligkeiten ausgewertet werden. Bei der Auswertung der Kontrastwerte können bestimmte Bildbereiche insbesondere um bestimmte Messobjekte, beispielsweise die Pupille etc., zur Auswertung in Betracht kommen. Bei den Größenwerten von vorgebbaren Parametern kommen insbesondere Größenwerte der Messobjekte in Betracht. Wird beispielsweise ein kleiner cornealer Reflex ermittelt, ist eher von einer niedrigen Messqualität auszugehen. Bei den Größenwerten von Ergebnisdaten kommt beispielsweise der Blickwinkel in Betracht: So ist ein kleiner Blickwinkel eher ein Indiz für eine hohe Messqualität, während ein großer Blickwinkel eher ein Indiz für eine geringe Messqualität darstellt. Wird das Vorhandensein vorgebbarer Objekte geprüft, ist beispielsweise zu berücksichtigen, ob das Vorhandensein eines oder zweier Augen ermittelt wird. Werden beispielsweise alle gesuchten kornealen Reflexe für beide Augen gefunden, so ist dies ein Indiz für eine höhere Messqualität, als wenn korneale Reflexe bei einem oder beiden Augen nicht gefunden wurden. Unterscheiden sich weiterhin beispielsweise die Blickwinkel zweiter Augen um mehr als einen vorgebbaren Schwellwert, so kann dies ein Indiz für eine geringe Messqualität sein. Eine hohe Änderungs- oder Beschleunigungsrate beispielsweise der Kopfpositionsdaten spricht eher für eine niedrige Messqualität, während umgekehrt niedrige Änderungs- und Beschleunigungsraten für eine hohe Messqualität sprechen.

Die Auflösung kann gemäß einer linearen, einer nicht-linearen, einer stetigen und/oder einer nicht-stetigen Kennlinie variiert werden. Auf diese Weise kann beispielsweise eine Anpassung an die Leistungsfähigkeit der entsprechenden Recheneinheit vorgenommen oder den spezifischen Anforderungen einer bestimmten Anwendung Rechnung getragen werden. Beispielsweise funktionieren implizite oder auch manchmal passiv genannte Anwendungsfälle, in denen zum Beispiel der Blickpunkt auf die Darstellung verwendet, aber nicht gezeigt wird, wie dies beispielsweise bei einigen Spielen der Fall ist, besser mit einer stetigen Kennlinie. Explizite Anwendungsfälle, also solche, bei denen der Blickpunkt sichtbar gemacht wird und ein Benutzer zum Beispiel einen Cursor oder eine andere Auswahlmarkierung sichtbar bewegt, wie beispielsweise ein Tabellenkalkulationsprogramm oder Eingabemasken, funktionieren besser mit diskreten Vergrößerungen. Analoges funktioniert für die Interaktion durch Kopfbewegung mit einer Anwendung. Eine nicht-lineare Kennlinie ist besonders in solchen Anwendungsfällen sinnvoll, in denen die Größenunterschiede der Interaktionselemente der Darstellung erheblich sind und bei geringerer Messqualität schnelle eine stärkere Vergrößerung gewählt werden muss, um eine flüssige Interaktion zu gewährleisten.

Es kann vorgesehen sein, dass die Variation der Auflösung durch einen Benutzer ein- und ausgeschaltet werden kann, insbesondere durch einen Tastenbefehl, einen Sprachbefehl oder einen Gestenbefehl. Wird beispielsweise die Auflösung der gesamten visuellen Darstellung vergrößert, kann dies dazu führen, dass die Arbeit mit einem in einem Arbeitsfenster ablaufenden Tabellenkalkulationsprogramm erleichtert wird. Jedoch könnten nach oder während der Bearbeitung andere Arbeitsfenster schlecht zu erkennen sein. Durch die Möglichkeit, die Variation der Auflösung ein- und auszuschalten, können dann auf einfache Weise wieder alle Arbeitsfenster auf der Anzeigevorrichtung erkennbar sein, um beispielsweise einem Benutzer einen Wechsel der Softwareanwendung zu ermöglichen. Außerdem kann es sinnvoll sein, eine oder mehrere global für den Nutzer oder spezifisch für bestimmte Anwendungsfälle geeignete Auflösungen abzuspeichern und wieder abzurufen. Besonders nützlich kann es sein, derartige spezifische Auflösungen an den Anwendungsfall zu binden und im Falle seines Eintretens automatisch einzustellen, so dass ein Gewöhnungseffekt beim Nutzer eintreten kann und die Auflösung nicht mehr als nötig variiert wird.

Bevorzugt wird der mindestens eine Qualitätsparameter ermittelt nach Schritt a), insbesondere mit Schritt b) oder zwischen Schritt b) und Schritt c), oder alternativ fortlaufend, d.h. zunächst nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bild-, Zwischen- oder Ergebnisdaten, insbesondere mindestens eines aus diesen Daten abgeleiteten Qualitätsparameters. Als besonders bevorzugte Zeitpunkte zur Ermittlung des mindestens einen Qualitätsparameters ist der Zeitpunkt der Initialisierung des Systems, inklusive der Kalibrierung und der Validierung, oder der Wechsel von Anwendungen, Dateien, Ansichten oder Prozessschritten, die neue Größen der Bedienelemente zur Folge haben können, zu nennen.

Die zur Variation der Auflösung nötigen Berechnungen können in der Trackingvorrichtung, beispielsweise in einem Eyetracker, oder mit einem separaten Programm auf dem Zielrechner oder als Teil des Betriebssystems oder als Teil einer Anwendung vorgenommen werden.

Als der mindestens eine Teil der Kopfes des Benutzers wird/werden bevorzugt dessen Kopf selbst und/oder ein und/oder zwei Augen des Benutzers bewegt.

Weitere bevorzugte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für das erfindungsgemäße Rechnerprogrammprodukt und das erfindungsgemäße System zum Betreiben einer Anzeigevorrichtung.

Nachfolgend werden nunmehr Ausführungsbeispiele der vorliegenden Erfindung unter Bezugnahme auf die beigefügten Zeichnungen näher beschrieben. Es zeigen:
- Fig. 1: in schematischer Darstellung den Aufbau einer ersten Ausführungsform eines erfindungsgemäßen Systems;
- Fig. 2: in schematischer Darstellung den Aufbau einer zweiten, einer dritten und einer vierten Ausführungsform eines erfindungsgemäßen Systems;
- Fig. 3: ein erstes Anwendungsbeispiel der vorliegenden Erfindung;
- Fig. 4: ein zweites Anwendungsbeispiel der vorliegenden Erfindung;
- Fig. 5: ein drittes Anwendungsbeispiel der vorliegenden Erfindung;
- Fig. 6: in schematischer Darstellung einen Signalflussgraphen einer ersten Ausführungsform des erfindungsgemäßen Verfahrens; und
- Fig. 7: in schematischer Darstellung einen Signalflussgraphen einer zweiten Ausführungsform des erfindungsgemäßen Verfahrens.

In den unterschiedlichen Figuren werden im Nachfolgenden der Übersichtlichkeit halber für gleiche und gleichwirkende Elemente dieselben Bezugszeichen verwendet.

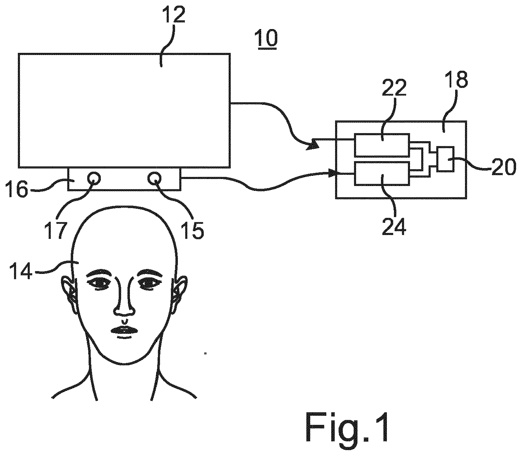

Fig. 1 zeigt in schematischer Darstellung den Aufbau eines erfindungsgemäßen Systems 10, wie er insbesondere bei einer stationären Situation Anwendung finden kann. Dabei ist ein Monitor 12 vor einem Benutzer 14 positioniert, wobei an der Unterseite des Monitors 12 ein Eyetracker 16 angeordnet ist, der eine Beleuchtungsvorrichtung 17 und eine Kameravorrichtung 15 zum Erfassen von Bilddaten mindestens eines Teils des Kopfes des Benutzers 14 umfasst. Mit dem Monitor 12 und dem Eyetracker 16 ist eine Datenverarbeitungseinrichtung 18 gekoppelt, in der eine Softwareanwendung 20 abgelegt ist, die eine visuelle Darstellung auf dem Monitor 12 erzeugt. Mittels einer Steuervorrichtung 22, die mit einer Recheneinrichtung 24 der Datenverarbeitungsvorrichtung gekoppelt ist, lässt sich die visuelle Darstellung der Anwendung auf dem Monitor 12 steuern. Die Recheneinrichtung 24 ist ausgebildet, auf der Basis der vom Eyetracker 16 erfassten Bilddaten zumindest eines Teils des Kopfes eines Benutzers, insbesondere dessen Kopf selbst oder ein oder zwei Augen, mindestens einen Qualitätsparameter zu ermitteln. Die Steuervorrichtung 22 ist ausgelegt, die Auflösung zumindest eines Teils der visuellen Darstellung auf dem Monitor 12 in Abhängigkeit des mindestens einen von der Recheneinheit 24 ermittelten Qualitätsparameters zu variieren. In einem nicht gezeigten Ausführungsbeispiel können auch mehrere Beleuchtungsvorrichtungen 17 und/oder mehrere Kameravorrichtungen 15 vorgesehen sein. Weiter alternativ kann die oben genannte Ermittlung des Qualitätsparameters auch auf einer Recheneinrichtung stattfinden, die im Eyetracker untergebracht ist, wobei dann nur die Messdaten und der ermittelte Qualitätsparameter an die Datenverarbeitungseinrichtung 18 weitergegeben werden.

Zur Ermittlung des mindestens einen Qualitätsparameters kann die Recheneinheit 24 Parameter in den erfassten Bilddaten auswerten, insbesondere Rauschanteile im Bild und/oder Rauschanteile der ermittelten Objekte. Sie kann auch Parameter bei der Auswertung der erfassten Bilddaten auswerten, insbesondere bei den aus den erfassten Bilddaten berechneten Zwischen- oder Ergebnisdaten. Dazu kann die Recheneinheit 24 ausgelegt sein, die erfassten Bilddaten zu analysieren im Hinblick auf Frequenzanteile in vorgebbaren Frequenzbereichen, Kontrastwerte in vorgebbaren Bildbereichen, Größenwerte von vorgebbaren Parametern, Größenwerte von Ergebnisdaten, das Vorhandensein vorgebbarer Objekte und/oder eine Änderungs- oder Beschleunigungsrate von aus den erfassten Bilddaten ermittelten Zwischen- oder Ergebnisdaten.

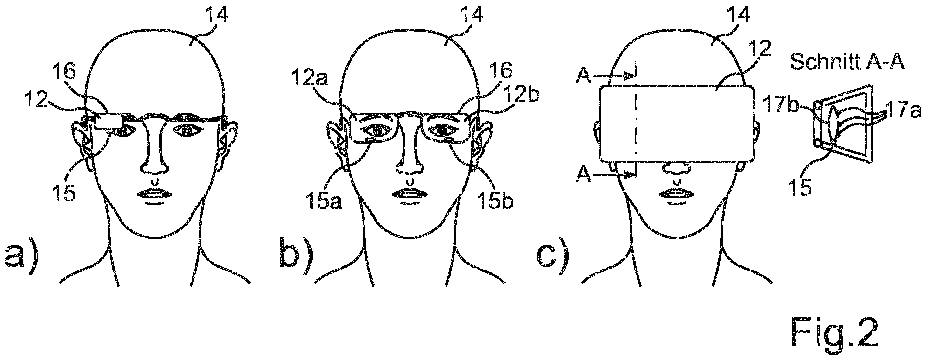

Fig. 2 zeigt schematisch Komponenten eines Ausführungsbeispiels eines erfindungsgemäßen Systems, wie sie bevorzugt bei einer mobilen Situation zur Anwendung kommen können. Dabei wird ein Eyetracker 16 benutzt, der nach Art einer Brille von einem Benutzer 14 getragen werden kann und neben mindestens einer Kamera 15 zur Erfassung von Bilddaten mindestens eines Auges des Benutzers 14 weiterhin über mindestens eine Anzeigeeinheit 12, beispielsweise ein Display, verfügt, die mit dem tragbaren Eyetracker 16 derart gekoppelt ist, dass ein Bild in mindestens ein Auge des Benutzers 14 projizierbar ist. Während Fig. 2a eine monokulare Ausführungsform zeigt, ist in Fig. 2b eine binokulare Ausführungsform dargestellt. Die monokulare Ausführungsform kann mit nur einer Kamera 15 und einer Anzeigevorrichtung 12 ausgebildet sein, während die binokulare Ausführungsform mit zwei Anzeigevorrichtungen 12a, 12b und zwei Kameras 15a, 15b realisiert ist.

In der in Fig. 2c dargestellten Ausführungsform ist wie in einem geschlossenen kopfgetragenen Display (HMD) die Anzeigevorrichtung 12 undurchsichtig ausgebildet und in einer mehr oder weniger geschlossenen Maske angeordnet, die überdies die mindestens eine Kamera 15 sowie LEDs 17a und eine den LEDs 17a zugeordnete Optik 17b umfasst des Eyetrackers 16 entweder in monokularer oder binokularer Form enthält. In einer derartigen Ausführungsform liefert die Anzeigevorrichtung 12 die Bilder für beide Augen des Benutzers 14.

Die Datenverarbeitungseinrichtung 18 von Fig. 1 kann bei den Ausführungsformen von Fig. 2 sowie der erwähnten Alternative in dem jeweiligen Eyetracker 16 vorgesehen sein. Es ist jedoch auch möglich, die Eyetracker 16 dieser über Kabel oder Funk mit einer mobilen oder stationären Datenverarbeitungseinrichtung 18 zu koppeln. Im Falle einer mobilen Ausführung der Datenverarbeitungsvorrichtung 18 kann diese bevorzugt als Smartphone oder Tablet PC ausgebildet sein.

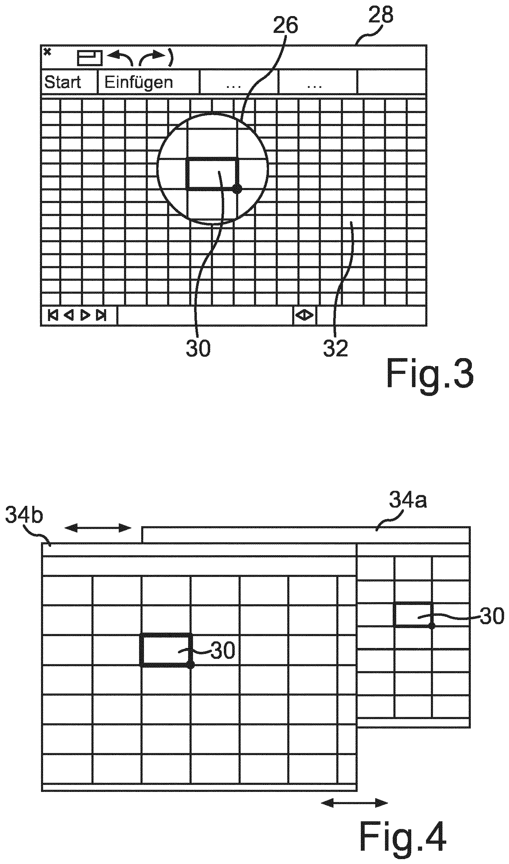

Fig. 3 zeigt in schematischer Darstellung ein Beispiel für eine Anwendung der vorliegenden Erfindung bei einem Tabellenkalkulationsprogramm, beispielsweise Excel. In Abhängigkeit des ermittelten Qualitätsparameters wird die Auflösung in einem Bereich 26 gemäß einer Lupenfunktion vergrößert. Der Bereich 26 kann in Abhängigkeit einer aus den erfassten Bilddaten ermittelten Blickrichtung des Benutzers über die gesamte visuelle Darstellung 28 bewegt werden. Wie deutlich zu erkennen ist, sind die Abmessungen einer Zelle 30 innerhalb des Bereichs 26 deutlich größer als bei einer Zelle 32 außerhalb des Bereichs 26. Wie weiterhin zu erkennen ist, hat der Benutzer 14 durch eine vorgebbare Maßnahme die Zelle 30 zur Bearbeitung aktiviert. Die Bearbeitung kann erfindungsgemäß bei einer größeren, dem Status des ermittelten Qualitätsparameters und gegebenenfalls der Kontextinformation entsprechenden Auflösung erfolgen, als sie für die Darstellung außerhalb des Bereichs 26 verwendet wird. Es kann vorgesehen sein, dass der Benutzer eine einmal ermittelte Vergrößerungseinstellung speichern und wiederverwenden kann. Weiterhin kann vorgesehen sein, dass die Auflösung bei Feststellen einer Änderung des Qualitätsparameters variiert werden kann. Damit wird eine jederzeit optimale Darstellung für eine effiziente Bedienung erreicht.

Auf der einen Seite ermöglicht es diese Funktion dem Benutzer 14, den Überblick zu bewahren, andererseits ermöglicht sie eine Bearbeitung unter guten optischen Bedingungen. Die Maßnahme zur Aktivierung der Zelle 30 innerhalb des Bereichs 26 kann beispielsweise darin bestehen, dass der Benutzer 14 seinen Blick auf diese Zelle richtet, gegebenenfalls gleichzeitig eine Taste drückt, eine Geste ausführt oder ein akustisches Signal von sich gibt. Es kann auch vorgesehen sein, dass die Aktivierung der Zelle 30 dadurch erfolgt, dass der Benutzer 14 seinen Blick auf diese Zelle 30 richtet und innerhalb eines vorgebbaren Zeitfensters mit einem oder zwei Augen zwinkert oder die Zelle für eine vorgebbare Mindestzeit fixiert. Andere Möglichkeiten sind für den Fachmann denkbar, jedoch nicht Gegenstand der vorliegenden Erfindung.

Fig. 4 zeigt ein weiteres Anwendungsbeispiel der vorliegenden Erfindung. Hier wird in Abhängigkeit des mindestens einen Qualitätsparameters die Auflösung eines Arbeitsfelds, d.h. beispielsweise eines Arbeitsfensters, variiert. Liegen gute Verhältnisse vor, d.h. beispielsweise eine hochwertige Tracking-Vorrichtung, eine gute Beleuchtung, ein geringer Abstand zwischen Tracking-Vorrichtung und Benutzer etc., kann das Arbeitsfenster mit niedriger Auflösung auf der Anzeigevorrichtung 12 dargestellt werden, beispielsweise wie das Arbeitsfenster 34a. Lässt jedoch der Qualitätsparameter auf schlechte Bedingungen schließen, wird das Arbeitsfenster mit einer verbesserten Auflösung dargestellt, siehe Arbeitsfenster 34b.

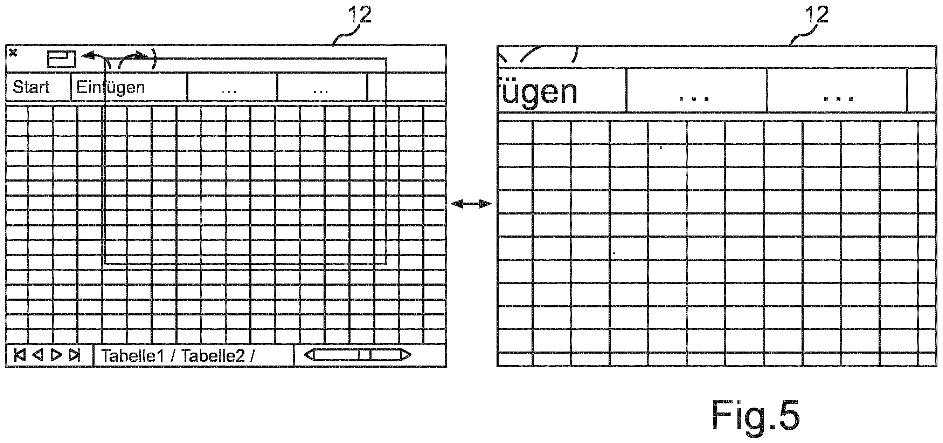

Fig. 5 zeigt eine weitere Anwendung der vorliegenden Erfindung. Links ist die visuelle Darstellung auf dem Monitor 12 bei guten Verhältnissen gezeigt, während rechts die visuelle Darstellung derselben Anwendung bei schlechten Verhältnissen gezeigt ist. Wie deutlich zu erkennen ist, ist die Auflösung der gesamten Darstellung vergrößert worden.

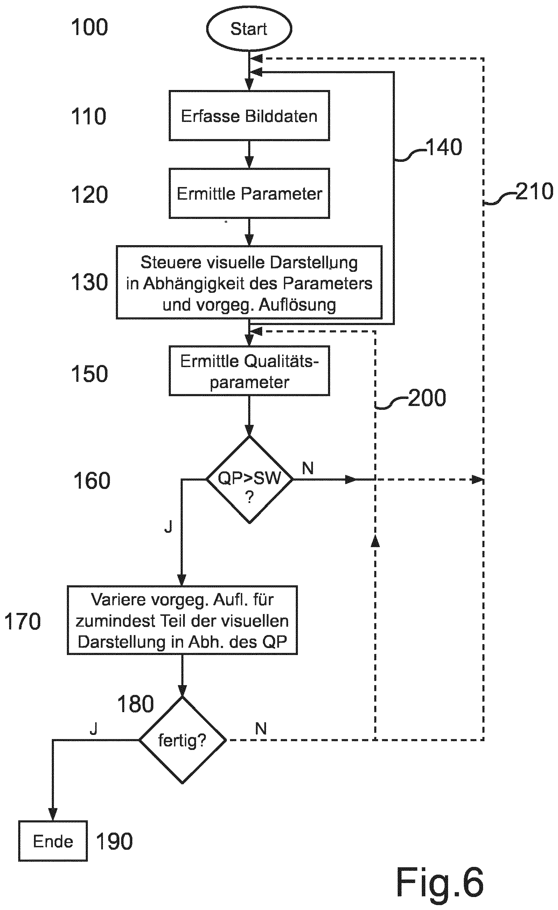

Fig. 6 zeigt ein Ausführungsbeispiel eines erfindungsgemäßen Verfahrens. Das Verfahren startet in Schritt 100. In Schritt 110 werden Bilddaten zumindest eines Teils des Kopfes eines Benutzers erfasst. Anschließend wird in Schritt 120 mindestens ein von dem Benutzer durch Bewegung zumindest eines Teils des Kopfes veränderbarer Parameter aus den in Schritt 110 erfassten Bilddaten ermittelt. Anschließend wird in Schritt 130 eine visuelle Darstellung auf einer Anzeigevorrichtung in Abhängigkeit des ermittelten mindestens einen Parameters und einer vorgegebenen Auflösung gesteuert. Beispielsweise wird in Schritt 120 die Blickrichtung ermittelt und dadurch eine Zelle 30 aktiviert, siehe hierzu beispielsweise Fig. 3 und 4. In jedem Fall läuft dann die Messschleife, wie durch den Schritt 140 symbolisiert, fortlaufend weiter, um den Parameter aus den Bilddaten zu ermitteln, zumindest solange die so gestaltete Interaktion aktiv ist.

Überdies wird vorliegend in Schritt 150 mindestens ein Qualitätsparameter auf der Basis der in Schritt 110 erfassten Bilddaten ermittelt. Dabei können die unmittelbar erfassten Bilddaten ausgewertet werden oder auch daraus berechnete Zwischen- oder Ergebnisdaten. Insbesondere werden dabei Rauschanteile im Bild und/oder Rauschanteile der ermittelten Objekte näher untersucht oder beispielsweise Rauschanteile der ermittelten Blickrichtung.

In Schritt 160 wird geprüft, ob der Wert des Qualitätsparameters über einem vorgebbaren Schwellwert liegt. Ist dies der Fall, so wird dann in Schritt 170 die vorgegebene Auflösung für zumindest einen Teil der visuellen Darstellung auf der Anzeigevorrichtung in Abhängigkeit dieses Werts variiert. Wird jedoch in Schritt 160 ein Unterschreiten des Schwellwerts festgestellt, wird das Verfahren entweder im Schritt 200 oder im Schritt 210 fortgesetzt (je nach Implementierung).

Die Schritte 150 bis 170 können einmalig ausgeführt werden, beispielsweise bei der Initialisierung eines erfindungsgemäßen Systems, insbesondere inklusive der Kalibrierung und der Validierung. In diesem Fall wird gegebenenfalls unter Umgehung des Schritts 160 im Schritt 180 in den mit "J" gekennzeichneten Zweig verzweigt, wonach das Verfahren im Schritt 190 beendet wird (Die Meßschleife umfassend die Schritte 110, 120, 130 und 140 läuft selbstverständlich weiter).

Soll die Auswertung fortlaufend durchgeführt werden, zweigt das Verfahren im Schritt 180 je nach Vereinbarung über den Schritt 200 oder den Schritt 210 zurück. Bei Rückverzweigung gemäß Schritt 200 oder Schritt 210 können die Schritte 150 bis 180 fortlaufend regelmäßig (wie vorliegend dargestellt) oder auch ereignis- bzw. schwellwertgetriggert vorgenommen werden.

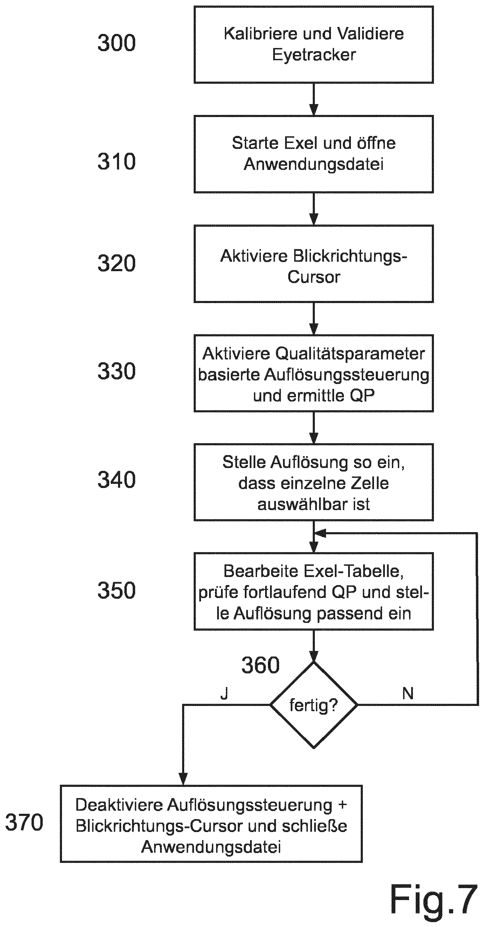

Fig. 7 zeigt ein Ausführungsbeispiel des erfindungsgemäßen Verfahrens am Beispiel des Tabellenkalkulationsprogramms Excel und der Verwendung eines Eyetrackers als Tracking-Vorrichtung. Dabei wird zunächst in Schritt 300 der Eyetracker kalibriert und validiert. Zu diesem Zweck misst der Eyetracker beispielsweise, wohin der Benutzer 14 auf dem Monitor 12 blickt (gaze point), und validiert die Genauigkeit in Abhängigkeit der Monitorkoordinaten. In Schritt 310 wird Excel gestartet und eine Anwendungsdatei geöffnet. Anschließend wird in Schritt 320 ein Blickrichtungscursor aktiviert, d.h. ein Cursor, der von dem Benutzer durch Variation seiner Blickrichtung über den Monitor bewegt werden kann. Die Aktivierung erfolgt beispielsweise über eine vorgebbare Taste auf der Tastatur.

Anschließend, d.h. in Schritt 330, oder gleichzeitig mit Schritt 320 wird die qualitätsparameterbasierte Auflösungssteuerung gemäß der vorliegenden Erfindung aktiviert. Wenn dies nicht gleichzeitig in Schritt 320 erfolgt, kann es ebenfalls durch Drücken einer vorgebbaren Tastenkombination oder durch ein akustisches oder visuelles Signal in Schritt 330 erfolgen.

In Schritt 340 wird die Auflösung so eingestellt, dass in Abhängigkeit des ermittelten Qualitätsparameters im Anwendungsbeispiel mittels der Blickrichtung eine einzelne Zelle einer Excel-Tabelle ausgewählt werden kann. Die einzelne Zelle, auf die der Benutzer 14 seinen Blick richtet, wird hervorgehoben dargestellt. Alternativ könnte die Gruppe von Zellen, die der aktuellen Auflösung der Darstellung und dem Qualitätsparameter des Eyetrackers entspricht, hervorgehoben werden. Der Benutzer sieht dann, dass die Auflösung nicht ausreicht, um eine einzelne Zelle visuell zu selektieren. Aktiviert er die erfindungsgemäße Auflösungsanpassung, so wird die Auflösung so angepasst, dass er eine Zelle sicher visuell selektieren kann.

In Schritt 350 wird die jeweilige, durch Blickrichtung ausgewählte Zelle bearbeitet. Dies beinhaltet die Auswahl einer Zelle mittels der Blickrichtung, die Aktivierung des Zelleneditiermodus, indem begonnen wird, auf die Tastatur zu drücken oder zu sprechen. Anschließend wird beispielsweise eine Formel in einen Zellbereich als Argument eingegeben, um eine erste Zelle eines Zellbereichs zu adressieren. Daraufhin wird auf eine relevante Zelle geblickt und eine Taste gedrückt, um diese auszuwählen. Anschließend wird auf die letzte Zelle des relevanten Zellbereichs geblickt und die Tastatur losgelassen, um die Auswahl zu komplettieren. Anschließend wird beispielsweise die ")"-Taste gedrückt, um die Formeleingabe zu beenden. Wenn innerhalb dieses Vorgangs beispielsweise die letzte relevante Zelle des Bereichs in einem Bereich ist, der mit geringerer Genauigkeit validiert wurde als die Startzelle des relevanten Bereichs, dann wird der Zoom automatisch variiert, um eine Einzelzellauswahl in diesem Bereich zu ermöglichen. Dasselbe würde erfindungsgemäß passieren, wenn sich beispielsweise aufgrund einer geänderten Entfernung zwischen Benutzer und Eyetracker die Rauschanteile bei der Blickrichtungsmessung ändern. Alternativ könnte die Einstellung der erfindungsgemäßen Autoskalierung dergestalt sein, dass gleich, d.h. automatisch, der gesamte sichtbare Zellenbereich so in der Auflösung angepasst wird, dass der Benutzer bei den gegebenen Bedingungen immer eine Zelle sicher visuell selektieren kann.

Während der Bearbeitung der Excel-Tabelle In Schritt 350 wird demnach fortlaufend der mindestens eine Qualitätsparameter geprüft wird und die Auflösung passend eingestellt, insbesondere so, dass auch bei einer Verschlechterung des Qualitätsparameters eine einzelne Zelle einer Excel-Tabelle anwählbar bleibt.

In Schritt 360 wird geprüft, ob die Bearbeitung der Excel-Tabelle abgeschlossen ist; falls nein, wird zu Schritt 350 zurückverzweigt; falls ja, wird Schritt 370 ausgeführt, wonach die Auflösungssteuerung deaktiviert wird und/oder der Blickrichtungscursor deaktiviert wird und/oder die Anwendungsdatei oder die Anwendung, d.h. Excel, geschlossen wird oder mit einem neuen Arbeitsbereich fortgesetzt wird.

## Patentansprüche

1. Verfahren zum Betreiben einer Anzeigevorrichtung (12), folgende Schritte umfassend:
a) Erfassen von Bilddaten zumindest eines Teils des Kopfes eines Benutzers (14) (Schritt 110);
b) Ermitteln mindestens eines von dem Benutzer (14) durch Bewegung zumindest eines Teils des Kopfes veränderbaren Parameters aus den in Schritt a) erfassten Bilddaten (Schritt 120);
c) Steuern einer visuellen Darstellung zum Bedienen einer Anwendung durch den Benutzer auf einer Anzeigevorrichtung (12) in Abhängigkeit des ermittelten mindestens einen Parameters (Schritt 130);
**gekennzeichnet durch** folgende weiteren Schritte:
d) Ermitteln mindestens eines Qualitätsparameters basierend auf der Erfassung in Schritt a) (Schritt 140);
e) Variieren zumindest einer Auflösung zumindest eines Teils der visuellen Darstellung in Abhängigkeit des mindestens einen Qualitätsparameters (Schritt 150);
wobei der in b) ermittelte Parameter eine Messgröße darstellt und der Qualitätsparameter die zur Messgröße gehörende Messgenauigkeit oder ein Maß für die zur Messgröße gehörende Messgenauigkeit darstellt.

2. Verfahren nach Anspruch 1,
**dadurch gekennzeichnet,**
**dass** zur Ermittlung des mindestens eines Qualitätsparameters eine Qualität und/oder Größe des in Schritt b) ermittelten Parameters und/oder eine Qualität der Erfassung der Bilddaten und/oder zur Ermittlung des mindestens einen Qualitätsparameters die in Schritt a) erfassten Bilddaten analysiert werden.

3. Verfahren nach einem der vorhergehenden Ansprüche,
**dadurch gekennzeichnet,**
**dass** die visuelle Darstellung zumindest ein durch Bewegung zumindest eines Teils des Kopfes bewegbares Element umfasst, wobei in Schritt e) die Auflösung einer Bewegungsgeschwindigkeit des zumindest einen bewegbaren Elements in Abhängigkeit des mindestens einen Qualitätsparameters variiert wird.

4. Verfahren nach einem der vorhergehenden Ansprüche,
**dadurch gekennzeichnet,**
**dass** in Schritt e) die Auflösung der gesamten visuellen Darstellung in Abhängigkeit des mindestens einen Qualitätsparameters variiert wird.

5. Verfahren nach Anspruch 4,
**dadurch gekennzeichnet,**
**dass** die visuelle Darstellung zumindest ein statisches und/oder ein dynamisches Element umfasst, wobei in Schritt e) die Auflösung des statischen und/oder des dynamischen Elements in Abhängigkeit des mindestens einen Qualitätsparameters variiert wird.

6. Verfahren nach einem der Ansprüche 4 oder 5,
**dadurch gekennzeichnet,**
**dass** als Teil der visuellen Darstellung die Auflösung mindestens eines Elements aus der folgenden Gruppe variiert wird:
- ein Bereich gemäß einer Lupenfunktion;
- der Inhalt eines vorgebbaren Arbeitsfensters;
- ein Mauszeiger;
- ein Cursor;
- ein Bedienelement einer Anwendung;
- ein Inhaltselement oder ein Bereich der von einer Anwendung dargestellten Daten;
- logische Segmente einer Anwendung, die die visuelle Darstellung erzeugt.

7. Verfahren nach einem der vorhergehenden Ansprüche,
**dadurch gekennzeichnet,**
**dass** zur Ermittlung des mindestens einen Qualitätsparameters mindestens eine Größe aus der folgenden Gruppe ermittelt wird:
- Parameter der in Schritt a) erfassten Bilddaten, insbesondere Rauschanteile, Frequenz-, Intensitätsverteilungen im Bild und/oder mindestens eines ermittelten Objekts;
- Parameter bei der Auswertung der in Schritt a) erfassten Bilddaten, insbesondere bei aus den erfassten Bilddaten berechneten Zwischen- oder Ergebnisdaten.

8. Verfahren nach einem der vorhergehenden Ansprüche,
**dadurch gekennzeichnet,**
**dass** zur Ermittlung des mindestens einen Qualitätsparameters die in Schritt a) erfassten Bilddaten analysiert werden im Hinblick auf mindestens eine der folgenden Größen:
- Frequenzanteile in vorgebbaren Frequenzbereichen, insbesondere durch örtlich-zeitliche Frequenzanalyse oder Wavelets;
- Kontrastwerte in vorgebbaren Bildbereichen, insbesondere Gradienten, Kanten, Intensitäten, Häufigkeiten/Verteilungen in Bildbereichen;
- Größenwerte von vorgebbaren Parametern;
- Größenwerte von Ergebnisdaten;
- das Vorhandensein mindestens eines vorgebbaren Objekts; und/oder
- eine Änderungs- oder Beschleunigungsrate von aus den in Schritt a) erfassten Bilddaten ermittelten Zwischen- oder Ergebnisdaten.

9. Verfahren nach einem der vorhergehenden Ansprüche,
**dadurch gekennzeichnet,**
**dass** die Variation der Auflösung durch einen Benutzer (14) ein- und ausgeschaltet werden kann, insbesondere durch einen Tastenbefehl, einen Sprachbefehl oder einen Gestenbefehl.

10. Verfahren nach einem der vorhergehenden Ansprüche,
**dadurch gekennzeichnet,**
**dass** mindestens eine einmal eingestellte Auflösung durch einen Benutzer (14) abhängig oder unabhängig von einer Anwendung, die die visuelle Darstellung erzeugt, gespeichert und wieder abgerufen wird, wobei das Speichern und das Abrufen durch voreingestellte oder vom Benutzer vorgebbare Interaktionen, insbesondere durch Tastenbefehle, Sprachbefehle oder Gestenbefehle erfolgt oder dass ein Kontext mitgespeichert wird und das Abrufen einer gespeicherten Auflösung automatisch bei Eintreten des Kontexts erfolgt.

11. Verfahren nach Anspruch 10,
**dadurch gekennzeichnet,**
**dass** der Kontext aus einem oder mehreren der folgenden Parameter bestimmt wird:
- eine vorgebbare Anwendung;
- eine vorgebbare Datei;
- eine vorgebbare Ansicht einer Anwendung, insbesondere der Toolbars, Fenster, Werkzeuge;
- eine vorgebbare Ansicht einer Datei, insbesondere bezüglich der sichtbaren Daten, der Bearbeitungseinstellungen, des Layouts, der sichtbaren Strukturen;
- ein bestimmte Prozessschritt in einem Ablauf, der durch eine Anwendung angeboten wird.

12. Verfahren nach einem der vorhergehenden Ansprüche,
**dadurch gekennzeichnet,**
**dass** der mindestens eine Qualitätsparameter ermittelt wird:
- nach Schritt a), insbesondere mit Schritt b) oder zwischen Schritt b) und Schritt c);
- fortlaufend, d.h. nach Schritt a) und weiterhin in vorgebbaren zeitlichen Abständen und/oder in Abhängigkeit mindestens eines vorgebbaren Ereignisses, bevorzugt bei Über- und/oder Unterschreiten mindestens eines vorgebbaren Schwellwerts für Bild-, Zwischen- oder Ergebnisdaten, insbesondere mindestens eines aus diesen Daten abgeleiteten Qualitätsparameters.

13. Verfahren nach einem der vorhergehenden Ansprüche,
**dadurch gekennzeichnet,**
**dass** die Anpassung der Auflösung nach mindestens einer der folgenden Bedingungen erfolgt:
- fortlaufend, wann immer der Qualitätsparameter einen neuen Wert erhält;
- wenn der Qualitätsparameter mindestens einen vorgebbaren Schwellwert überschreitet;
- wenn sich der Kontext ändert;
- wenn der Benutzer eine vorgebbare Aktion ausführt, insbesondere eine vorgebbare Taste drückt, eine vorgebbare Geste ausführt und/oder ein vorgebbares akustisches Signal gibt.

14. Verfahren nach einem der vorhergehenden Ansprüche,
**dadurch gekennzeichnet,**
**dass** als der mindestens eine Teil des Kopfes des Benutzers (14) dessen Kopf und/oder ein und/oder zwei Augen des Benutzers (14) bewegt wird/werden.

15. Rechnerprogrammprodukt mit einem Programm für eine Rechnereinrichtung, mit Programmcodeabschnitten zum Ausführen und/oder Veranlassen der Schritte gemäß einem der vorhergehenden Ansprüche, wenn das Programm auf der Rechnereinrichtung ausgeführt wird.

16. System zum Betreiben einer Anzeigevorrichtung (12; 12a, 12b) mit
- einer Erfassungsvorrichtung (15; 15a, 15b, 17) zum Erfassen von Bilddaten zumindest eines Teils des Kopfes eines Benutzers (14);
- mindestens einer Recheneinrichtung (24), die ausgelegt ist, mindestens einen von dem Benutzer (14) durch Bewegung zumindest eines Teils des Kopfes veränderbaren Parameter aus den von der Erfassungsvorrichtung (15; 15a, 15b, 17) erfassten Bilddaten zu ermitteln;
- einer Steuervorrichtung (22) zum Steuern einer visuellen Darstellung auf einer Anzeigevorrichtung (12) in Abhängigkeit des von der Recheneinrichtung (24) ermittelten mindestens einen Parameters zum Bedienen einer Anwendung durch den Benutzer;
**dadurch gekennzeichnet,**
**dass** mindestens eine Recheneinrichtung (24) vorgesehen ist, die ausgebildet ist, basierend auf den in Schritt a) erfassten Bilddaten mindestens einen Qualitätsparameter zu ermitteln, wobei die Steuervorrichtung (22) weiterhin ausgelegt ist, zumindest eine Auflösung zumindest eines Teils der visuellen Darstellung in Abhängigkeit des mindestens einen Qualitätsparameters zu variieren, wobei der ermittelte Parameter eine Messgröße darstellt und der Qualitätsparameter die zur Messgröße gehörende Messgenauigkeit oder ein Maß für die zur Messgröße gehörende Messgenauigkeit darstellt.

## Claims

1. Method for operating a display device (12), comprising the following steps:
a) capturing image data of at least a part of the head of a user (14) (step 110);
b) determining at least one variable parameter by the user (14) by moving at least part of the head from the image data captured in step a) (step 120);
c) controlling a visual representation for operating an application by the user on a display device (12) dependent on the determined at least one parameter (step 130);
**characterised by** the following further steps:
d) determining at least one quality parameter based on the detection in step a) (step 140);
e) varying at least one resolution of at least part of the visual representation dependent on the at least one quality parameter (step 150);
wherein the parameter determined in b) represents a measured value and the quality parameter represents the measurement accuracy associated with the measured value or a measure of the measurement accuracy associated with the measured value.

2. Method according to claim 1, **characterised in that**, to determine the at least one quality parameter, a quality and/or magnitude of the parameter determined in step b) and/or a quality of the capturing of the image data and/or, to determine the at least one quality parameter, the image data captured in step a) are analysed.

3. Method according to one of the preceding claims, **characterised in that** the visual representation comprises at least one element movable by movement of at least a part of the head, wherein in step e) the resolution of a speed of movement of the at least one movable element is varied as a function of the at least one quality parameter.

4. Method according to one of the preceding claims, **characterised in that** in step e) the resolution of the entire visual representation is varied dependent on the at least one quality parameter.

5. Method according to claim 4, **characterised in that** the visual representation comprises at least one static and/or one dynamic element, wherein in step e) the resolution of the static and/or the dynamic element is varied dependent on the at least one quality parameter.

6. Method according to one of the claims 4 or 5, **characterised in that** the resolution of at least one element from the following group is varied as part of the visual representation:
an area according to a magnifying glass function;
the content of a pre-definable working window;
a mouse pointer;
a cursor;
an operating element of an application;
a content element or a range of data represented by an application;
logical segments of an application that creates the visual representation.

7. Method according to one of the preceding claims, **characterised in that** at least one value from the following group is determined in order to determine the at least one quality parameter:
parameters of the image data captured in step a), in particular noise components, frequency and intensity distributions in the image and/or of at least one determined object;
parameters when evaluating the image data captured in step a), in particular intermediate or result data calculated from the captured image data.

8. Method according to one of the preceding claims, **characterised in that**, in order to determine the at least one quality parameter, the image data captured in step a) are analysed with regard to at least one of the following values:
frequency components in pre-definable frequency ranges, in particular by spatio-temporal frequency analysis or wavelets;
contrast values in pre-definable image areas, especially gradients, edges, intensities, frequencies/distributions in image areas;
size values of pre-definable parameters;
size values of result data;
the presence of at least one pre-definable object; and/or
a rate of change or acceleration of intermediate or result data obtained from the image data captured in step a).

9. Method according to one of the preceding claims, **characterised in that** the variation of the resolution can be switched on and off by a user (14), in particular by a key command, a voice command or a gesture command.

10. Method according to one of the preceding claims, **characterised in that** at least one resolution which has been set once is stored and retrieved again by a user (14) dependent on or independently of an application which generates the visual representation, at least one resolution which has been set once being stored and retrieved again by a user (14), the storage and retrieval taking place by means of preset interactions or interactions which can be pre-defined by the user, in particular by means of key commands, voice commands or gesture commands, or **in that** a context is also stored and the retrieval of a stored resolution takes place automatically when the context occurs.

11. Method according to claim 10, **characterised in that** the context is determined from one or more of the following parameters:
a pre-definable application;
a pre-definable file;
a pre-definable view of an application, especially of toolbars, windows, tools;
a pre-definable view of a file, especially with regard to the visible data, the editing settings, the layout, the visible structures;
a specific process step in a sequence that is offered by an application.

12. Method according to one of the preceding claims, **characterised in that** the at least one quality parameter is determined:
after step a), in particular with step b) or between step b) and step c);
continuously, i.e. after step a) and further at pre-definable time intervals and/or dependent on at least one pre-definable event, preferably when at least one pre-definable threshold value for image, intermediate or result data, in particular at least one quality parameter derived from this data, is exceeded and/or undershot.

13. Method according to one of the preceding claims, **characterised in that** the adjustment of the resolution takes place according to at least one of the following conditions:
continuously whenever the quality parameter receives a new value;
if the quality parameter contains at least one pre-definable threshold value is exceeded;
when the context changes;
when the user performs a pre-definable action, in particular by pressing a pre-definable key, performing a pre-definable gesture and/or giving a pre-definable acoustic signal.

14. Method according to one of the preceding claims, **characterised in that** as the at least one part of the head of the user (14) his head and/or one and/or two eyes of the user (14) is/are moved.

15. A computer program product comprising a program for a computer device, having program code sections for executing and/or causing the steps according to one of the preceding claims when the program is executed on the computer device.

16. System for operating a display device (12; 12a, 12b) having
a capturing device (15; 15a, 15b, 17) for capturing image data of at least a part of the head of a user (14);
at least one computer device (24) which is designed to determine at least one parameter which can be changed by the user (14) by moving at least part of the head from the image data captured by the capturing device (15; 15a, 15b, 17);
a control device (22) for controlling a visual representation on a display device (12) dependent on the at least one parameter determined by the computer device (24) for operating an application by the user;
**characterised in that** at least one computer device (24) is provided which is designed to determine at least one quality parameter on the basis of the image data captured in step a), the control device (22) further being designed to vary at least one resolution of at least part of the visual representation dependent on the at least one quality parameter, the determined parameter representing a measured value and the quality parameter representing the measurement accuracy associated with the measured value or a measure of the measurement accuracy associated with the measured value.

## Revendications

1. Procédé de mise en oeuvre d'un dispositif d'affichage (12) comprenant les étapes suivantes :
a) acquisition de données d'image d'au moins une partie de la tête d'un utilisateur (14) (étape 110) ;
b) détection d'au moins un paramètre modifiable par l'utilisateur (14) par déplacement d'au moins une partie de la tête à partir des données d'image acquises à l'étape a) (étape 120) ;
c) commande d'une représentation visuelle pour utilisation d'une application par l'utilisateur sur un dispositif d'affichage (12) en fonction du au moins un paramètre détecté (étape 130) ;
**caractérisé par** les autres étapes suivantes :
d) détection d'au moins un paramètre qualitatif sur la base de l'acquisition à l'étape a) (étape 140) ;
e) variation d'au moins une résolution d'au moins une partie de la représentation visuelle en fonction du au moins un paramètre qualitatif (étape 150) ;
le paramètre détecté en b) représentant une grandeur de mesure, et le paramètre qualitatif représentant la précision de mesure appartenant à la grandeur de mesure ou un degré de la précision de mesure appartenant à la grandeur de mesure.

2. Procédé selon la revendication 1,
**caractérisé en ce que**,
pour détecter le au moins un paramètre qualitatif, une qualité et/ou une grandeur du paramètre détecté à l'étape b) et/ou une qualité de l'acquisition des données d'image, et/ou pour détecter le au moins un paramètre qualitatif, les données d'image acquises à l'étape a) sont analysées.

3. Procédé selon une des revendications précédentes,
**caractérisé en ce que**
la représentation visuelle comprend au moins un élément déplaçable par déplacement d'au moins une partie de la tête, la résolution d'une vitesse de déplacement du au moins un élément déplaçable étant variée à l'étape e) en fonction du au moins un paramètre qualitatif.

4. Procédé selon une des revendications précédentes,
**caractérisé en ce que**
la résolution de la représentation visuelle totale est variée à l'étape e) en fonction du au moins un paramètre qualitatif.

5. Procédé selon la revendication 4,
**caractérisé en ce que**
la représentation visuelle comprend au moins un élément statique et/ou un élément dynamique, la résolution de l'élément statique et/ou de l'élément dynamique étant variée à l'étape e) en fonction du au moins un paramètre qualitatif.

6. Procédé selon une des revendications 4 ou 5,
**caractérisé en ce que**
la résolution d'au moins un élément du groupe suivant est variée en tant que partie de la représentation visuelle :
- une zone selon une fonction loupe ;
- le contenu d'une fenêtre de travail prescriptible ;
- un pointeur de souris ;
- un curseur ;
- un élément de commande d'une application ;
- un élément de contenu ou une zone des données représentées avant une application ;
- des segments logiques d'une application qui produit une représentation visuelle.

7. Procédé selon une des revendications précédentes,
**caractérisé en ce que**
pour détecter le au moins un paramètre qualitatif, au moins une grandeur du groupe suivant est détectée :
- paramètre des données d'image acquises à l'étape a), en particulier composantes de bruit, répartitions de fréquences et d'intensités dans l'image et/ou d'au moins un objet détecté ;
- paramètre lors de l'analyse des données d'image acquises à l'étape (a), en particulier en présence de données intermédiaires ou finales calculées à partir des données d'image acquises.

8. Procédé selon une des revendications précédentes,
**caractérisé en ce que**,
pour détecter le au moins un paramètre qualitatif, les données d'image acquises à l'étape a) sont analysées en fonction d'au moins une des grandeurs suivantes :
- composantes de fréquence dans des plages de fréquence prescriptibles, en particulier par analyse fréquentielle loco-temporelle ou ondelettes ;
- valeurs de contraste dans des zones d'image prescriptibles, en particulier gradients, bords, intensité, fréquences/répartitions dans des zones d'image ;
- valeurs de taille de paramètres prescriptibles ;
- valeurs de taille de données finales ;
- la présence d'au moins un objet prescriptible ; et/ou
- un taux de variation ou d'accélération de données intermédiaires ou finales détectées à partir des données d'image acquises à l'étape a).

9. Procédé selon une des revendications précédentes,
**caractérisé en ce que**
la variation de la résolution peut être lancée et arrêtée par un utilisateur (14), en particulier par l'intermédiaire d'une commande par touche, d'une commande vocale ou d'une commande gestuelle.

10. Procédé selon une des revendications précédentes,
**caractérisé en ce que**
au moins une résolution réglée une fois est mémorisée et rappelée par un utilisateur (14) de façon dépendante ou indépendante d'une application qui produit la représentation visuelle, la mémorisation et le rappel s'effectuant par des interactions préréglées ou prescriptibles par l'utilisateur, en particulier par l'intermédiaire de commandes par touche, de commandes vocales ou de commandes gestuelles, ou **en ce qu'**un contexte est mémorisé en même temps et le rappel d'une résolution mémorisée s'effectue automatiquement à l'apparition du contexte.

11. Procédé selon la revendication 10,
**caractérisé en ce que**
le contexte est déterminé à partir d'un ou de plusieurs des paramètres suivants :
- une application prescriptible ;
- un fichier prescriptible ;
- une vue prescriptible d'une application, en particulier des barres d'outils, fenêtres, outils ;
- une vue prescriptible d'un fichier, en particulier relatif aux données visibles, aux réglages de traitement, à la présentation graphique, aux structures visibles ;
- une étape de procédé déterminée lors d'une séquence proposée par une application.

12. Procédé selon une des revendications précédentes,
**caractérisé en ce que**
le au moins un paramètre qualitatif est détecté :
- après l'étape a), en particulier avec l'étape b) ou entre l'étape b) et l'étape c) ;
- en continu, c'est-à-dire après l'étape a) et ensuite à intervalles temporels prescriptibles et/ou en fonction d'au moins un événement prescriptible, préférentiellement en cas de franchissement par excès et/ou par défaut d'au moins une valeur de seuil prescriptible pour des données d'image, intermédiaires ou finales, en particulier d'au moins un paramètre qualitatif déduit de ces données.

13. Procédé selon une des revendications précédentes,
**caractérisé en ce que**
l'adaptation de la résolution s'effectue selon au moins l'une des modalités suivantes :
- en continu, à chaque fois que le paramètre qualitatif reçoit une valeur nouvelle ;
- lorsque le paramètre qualitatif franchit par excès au moins une valeur de seuil prescriptible ;
- lorsque le contexte change ;
- lorsque l'utilisateur effectue une action prescriptible, en particulier presse une touche prescriptible, effectue un geste prescriptible et/ou délivre un signal acoustique prescriptible.

14. Procédé selon une des revendications précédentes,
**caractérisé en ce que** la au moins une partie de la tête de l'utilisateur (14) qui est déplacée est la tête de celui-ci et/ou un oeil et/ou les deux yeux de l'utilisateur (14).

15. Produit de programme informatique comprenant un programme pour un équipement informatique, comprenant des portions de code de programme pour réaliser et/ou initier les étapes selon une des revendications précédentes lorsque le programme est exécuté sur l'équipement informatique.

16. Système de mise en oeuvre d'un dispositif d'affichage (12 ; 12a, 12b) comprenant
- un dispositif d'acquisition (15 ; 15a, 15b, 17) pour acquérir des données d'image d'au moins une partie de la tête d'un utilisateur (14) ;
- au moins un équipement informatique (24) qui est conçu pour détecter, à partir des données d'image acquises par le dispositif d'acquisition (15 ; 15a, 15b, 17), au moins un paramètre modifiable par utilisateur (14) par déplacement d'au moins une partie de la tête ;
- un dispositif de commande (22) pour commander une représentation visuelle sur un dispositif d'affichage (12) en fonction du au moins un paramètre détecté par l'équipement informatique (24) pour l'utilisation d'une application par l'utilisateur ;
**caractérisé en ce que**
au moins un équipement informatique (24) est prévu, lequel est conçu pour détecter au moins un paramètre qualitatif sur la base des données d'image acquises à l'étape a), le dispositif de commande (22) étant également conçu pour varier au moins une résolution d'au moins une partie de la représentation visuelle en fonction du au moins un paramètre qualitatif, le paramètre détecté représentant une grandeur de mesure, et le paramètre qualitatif représentant la précision de mesure appartenant à la grandeur de mesure ou un degré de la précision de mesure appartenant à la grandeur de mesure.
